# NEUE EUROPÄISCHE PATENTSCHRIFT

(11) **EP 0 505 345 B2**
(45) Veröffentlichungstag und Bekanntmachung des Hinweises auf die Entscheidung über den Einspruch: **01.10.1997**
(45) Hinweis auf die Patenterteilung: 21.06.1995
(21) Anmeldenummer: 92890042.2
(22) Anmeldetag: 19.02.1992
(51) Int. Cl.: F16D 69/02

(54) **Durch Sintern hergestelltes Reibmaterial**
Friction material obtained by sintering
Matériau de friction obtenu par frittage

(30) Priorität: 20.03.1991 AT 624/91
(43) Veröffentlichungstag der Anmeldung: 23.09.1992
(73) Patentinhaber: HOERBIGER GmbH, 86956 Schongau (DE)
(72) Erfinder: Blankenhagen, Fred, Ing., W-8122 Penzberg (DE); Pütz, Hermann, Ing., W-8920 Schongau (DE)
(74) Vertreter: Klein, Adam, Dipl.Ing.

(56) Entgegenhaltungen:
- DE-A- 1 558 466
- PATENT ABSTRACTS OF JAPAN vol. 012, no. 230 (C-508)29. Juni 1988 & JP-A- 63 024 040
- PATENT ABSTRACTS OF JAPAN vol. 010, no. 063 (C-332)13. Juni 1986 & JP-A- 60 200 927
- PATENT ABSTRACTS OF JAPAN vol. 012, no. 467 (C-550)7. Dezember 1988 & JP-A- 63 186 851
- Metallpulverkatalog vom Juni 1986 der Norddeutschen Affinerie AG

## Beschreibung

Die Erfindung bezieht sich auf ein durch Sintern hergestelltes, pulvermetallurgisch aufgebautes Reibmaterial für Reibflächen von Kupplungen oder Bremsen das pulverförmige und/oder körnige, metallische und nichtmetallische Bestand; teile enthält, von denen wenigstens einer ein Buntmetall ist.

Reibmaterialien dieser Art, die durch Sintern hergestellt werden, sind bekannt und werden vor allem im Kraftfahrzeugbau, aber auch im allgemeinen Maschinenbau, in unterschiedlichen Getrieben und Bremseinrichtungen eingesetzt. Aus dem Metallpulverkatalog vom Juni 1986 der Norddeutsche Afinerie Aktiengesellschaft ist ein metallischer Reibbelag bekannt, der neben Messingpulver als Hauptbestandteil freies Kupferpulver sowie Eisen und Zinn enthält. Die bekannten Reibmaterialien sind aus Sinterpulver auf Kupferbasis hergestellt. Aus den JP-A-63 109 131, 62 260 030, 61 207 549, 61 067 737, 60 116 751, 58 151 444 und 58 079 073 sind Sinterpulver bekannt, denen neben Kupfer als Hauptbestandteil weitere Metalle wie insbesondere Zinn, Zink u.a. beigemischt sind. Die metallischen Komponenten werden dabei in der elementaren Form, d.h. als Kupfer, Zinn, Zink usw. eingesetzt. Da die Sinterung nicht in der schmelzflüssigen Phase, sondern im "teigigen Zustand" stattfindet, ist in den gesinterten Reibbelägen Kupfer in freier Form enthalten. Die Sintertemperatur für metallische Reibbeläge liegt bei etwa 800°C, die Schmelztemperatur des Hauptbestandteiles Kupfer jedoch bei 1083°C.

Die fortgeschrittene Entwicklung auf dem Gebiet der Getriebeeinrichtungen erfordert es, daß immer mehr Leistung auf kleinerem Raum zusammengefaßt wird, was wiederum bedingt, daß die einzelnen Bauteile an diese erhöhte Belastung angepaßt werden. Davon sind auch die Reibmaterialien und die zur Schmierung verwendeten Getriebeöle betroffen. Um den hohen Anforderungen zu entsprechen, müssen hochlegierte Öle mit speziellen Ölzusätzen verwendet werden. Die Verbesserung der Getriebeöleigenschaften wirkt sich durchaus vorteilhaft hinsichtlich Belastbarkeit, Verschleißreduzierung, Lebensdauer, Reibungsverhalten, Ölalterung, Geräuschdämpfung, Kraftstoffeinsparung durch Verbesserung des Getriebewirkungsgrades u.a. aus. Sie bringt aber auch Funktionsnachteile bei den in den Getrieben eingesetzten Reibelementen mit sich, insbesondere wenn deren Reibflächen mit den bisher bekannten gesinterten Reibmaterialien versehen sind.

Durch Einwirkung der hochlegiertem Öle auf die bekannten, auf Kupferbasis hergestellten Reibmaterialien bilden sich auf diesen Reaktionsschichten, die das Reibverhalten nachteilig beeinflussen. Der durch die Schichtbildung verursachte Reibwertabfall führt zu Funktionsstörungen. In Synchronisationseinrichtungen von Kraftfahrzeuggetrieben führen z.B. die Reibmomentverluste zu einer Verschlechterung der Schaltqualität in Verbindung mit unangenehmen Geräuschen. Die chemische Reaktion der Ölzusätze mit dem Kupfer der gesinterten Reibmaterialien führt außerdem zu einem Zerfall der Belagstruktur, was stark erhöhte Verschleißwerte bedingt. An den Korngrenzen der porösen Belagstruktur werden die Bindezonen der metallischen Belagpartikel zersetzt und der innere Belagverband bricht mit zunehmender Betriebsdauer zusammen.

Der Erfindung liegt die Aufgabe zugrunde, die bisher bekannten durch Sintern hergestellten Reibmaterialien und deren Widerstandsfähigkeit gegen aggressive Öle zu verbessern sowie ein pulvermetallurgisch aufgebautes Sinterreibmaterial zu finden, das unter der Einwirkung von aggressiv wirkenden Ölzusätzen eine gute Stabilität aufweist und somit die zerstörenden chemischen Reaktionen unterbindet, die bei den bekannten Reibmaterialien die Reib- und Verschleißeigenschaften nachteilig beeinflussen.

Durch die Erfindung wird diese Aufgabe mit einem Reibmaterial der eingangs genannten Zusammensetzung dadurch gelöst, daß das Buntmetall überwiegend aus Messingpulvern einer oder unterschiedlicher Legierungen besteht. Die Buntmetallkomponenten des erfindungsgemäßen Reibmaterials sind somit auf Messingbasis aufgebaut, so daß das Reibmaterial keine freien Kupferpulver enthält, was bei den bekannten Sinterreibwerkstoffen der Fall ist. Chemische Untersuchungen des Reibmaterials haben in überraschender Weise gezeigt, daß die legierten Messingpulver gegenüber den Kupferpulvern eine viel höhere Beständigkeit gegen Ölzusätze aufweisen und nachteilige chemische Reaktionen erst bei einem viel höheren Temperaturniveau auftreten. Dies gilt auch für die in erster Linie kritischen, sogenannten EP-Additiven, die als Ölzusätze in den hochviskosen Schmierstoffen für Schaltgetriebe und Hypoidachsgetriebe hauptsächlich eingesetzt werden. Diese als Verschleißinhibitoren konzipierten "Extreme-Pressure"-Additive sind Zusätze auf Phosphor- und Schwefelbasis.

Die durch Spaltung der Additive bei höheren Temperaturen entstehenden Spaltprodukte, und hierbei insbesondere die Schwefelwasserstoffe (H2S), führen zu den nachteiligen Reaktionen mit den Buntmetallen der bekannten Sintermaterialien, wobei bereits bei niedrigem Temperaturniveau die freien Kupferzusätze angegriffen werden. Bei der erfindungsgemäßen Zusammensetzung des Reibmaterials sind solche schädigende Reaktionen nicht möglich. Zur Vermeidung von Umwelt- und Gesundheitsschädigungen bei der Herstellung und bei der Anwendung der gesinterten Reibmaterialien wird beim erfindungsgemäßen Reibmaterial vorzugsweise auf die üblichen Bleizusätze verzichtet. Als Metallkomponenten in reiner Form kommen dabei lediglich Zinn und Eisen in den erfindungsgemäßen Reibmaterialien zur Anwendung.

Hinsichtlich der Sintertechnik können unter Verwendung des erfindungsgemäßen Reibmaterials Sinterreibbeläge sowohl nach dem bekannten Sinterpulver-Streuverfahren als auch nach dem gleichfalls bekannten Folienverfahren gemäß der dort angewendeten Preßtechnik hergestellt werden. In praktischen Anwendungsversuchen hat sich die Überlegenheit der mit erfindungsgemäßem Reibmaterial versehenen Sintermessing-Reibbeläge gegenüber den bekannten metallischen Reibbelägen bestätigt.

Ein bevorzugtes Reibmaterial besteht gemäß der Erfindung darin, daß die Messingpulver aus Legierungen mit 70-90 Gew.-% Kupfer und 30-10 Gew.-% Zink bestehen. Vorzugsweise beträgt der Anteil an Messingpulvern bis zu 90 Gew.-% des Reibmaterials. Mit diesen Zusammensetzungen wurden besonders gute Ergebnisse im Sinne der erfindungsgemäßen Aufgabenlösung erzielt.

Außer der chemischen Zusammensetzung des erfindungsgemäßen Reibmaterials ist es für dieses auch von Bedeutung, die verwendeten Messingpulver sintertechnisch mit den anderen metallischen und nichtmetallischen Bestandteilen in die Struktur des aus dem Reibmaterial gebildeten Reibbelags zu integrieren. Dabei sind das Reibverhalten beeinflussende Funktionsmerkmale wie Porosität, Oberflächenrauhigkeit, Festigkeit und Homogenität der Belagsstruktur zu berücksichtigen und optimal zu gestalten. Andere zu berücksichtigende Faktoren sind die Sintertemperaturen und die Sinterzeiten, die auf die Form und die Größe der einzusetzenden Reibbelagpulver abzustimmen sind.

Im Rahmen der Erfindung wird diesen Anforderungen in vorteilhafter Weise dadurch entsprochen, daß die Korngrößen der Messingpulver zwischen 40 und 200µ liegen und die Einzelkomponenten mit den anderen Bestandteilen als Körnungsbänder ausgeführt sind, die in der Mischung ein homogenes rieselfähiges Gemisch ergeben. Außerdem hat es sich als vorteilhaft erwiesen, wenn die Reibfläche im Endzustand eine Porosität von 10-40 % aufweist.

Nachfolgend sind zwei Beispiele des erfindungsgemäßen Reibmaterials angeführt:

| Beispiel 1: | |
|---|---|
| Messing | 84 Gew.-% |
| Quarzit | 5 Gew.-% |
| Aluminiumoxyd | 1 Gew.-% |
| Graphit | 5 Gew.-% |
| Zinn | 5 Gew.-% |

| Beispiel 2: | |
|---|---|
| Messing | 66 Gew.-% |
| Quarzit | 3 Gew.-% |
| Aluminiumoxyd | 1 Gew.-% |
| Graphit | 5 Gew.-% |
| Zinn | 5 Gew.-% |
| Eisen | 20 Gew.-% |

In beiden Ausführungsbeispielen wird die Korngröße erfindungsgemäß so gewählt, daß die Körnungsbänder der einzelnen Komponenten des Reibmaterials ein homogenes rieselfähiges Gemisch ergeben. Auch die Teilchenform und die Größe der nichtmetallischen Belagbestandteile richten sich nach den jeweiligen Anforderungen und nach der Zusammensetzung des Reibmaterials, wobei sie auch von jenen der Substanzen der bekannten Sinterreibmaterialien abweichen können.

## Patentansprüche

1. Durch Sintern hergestelltes, pulvermetallurgisch aufgebautes Reibmaterial für Reibflächen von Kupplungen oder Bremsen, das pulverförmige und/oder körnige, überwiegend metallische und nichtmetallische Bestandteile enthält, von denen wenigstens einer ein Buntmetall ist, wobei die Buntmetallkomponenten des Reibmaterials auf Messingbasis aufgebaut sind, das Buntmetall überwiegend aus Messingpulvern einer oder unterschiedlicher Legierungen besteht und das Reibmaterial keine freien Kupferpulver, sondern nur Zinn und allenfalls Eisen als Metallkomponenten in reiner Form enthält.

2. Reibmaterial nach Anspruch 1, 2, dadurch gekennzeichnet, daß die Messingpulver aus Legierungen mit 70-90 Gew.-% Kupfer und 30-10 Gew.-% Zink bestehen.

3. Reibmaterial nach Anspruch 1, oder 2, dadurch gekenn zeichnet, daß der Anteil an Messingpulvern bis zu 90 Gew.-% des Reibmaterials beträgt.

4. Reibmaterial nach einem der Ansprüche 1 bis 3, dadurch gekennzeichnet, daß die Korngrößen der Messingpulver zwischen 40 und 200µ liegen und die Einzelkomponenten mit den anderen Bestandteilen als Körnungsbänder ausgeführt sind, die in der Mischung ein homogenes rieselfähiges Gemisch ergeben.

5. Reibmaterial nach einem der Ansprüche 1 bis 4, dadurch gekennzeichnet, daß die fertiggesinterte und gepreßte Reibfläche eine Porosität von 10-40 % aufweist.

## Claims

1. A sintered friction material, produced by powder metallurgy, for friction surfaces of clutches or brakes, the said material comprising powdered and/or granular, predominantly metallic and non-metallic constituents, at least one of which is a non-ferrous metal, wherein the non-ferrous metal components of the friction material are brass-based, the non-ferrous metal predominantly comprises brass powders of one or various alloys, and the friction material does not contain any free copper powders, but only tin and, optionally, iron as metal components in pure form.

2. A friction material according to claim 1, characterised in that the brass powders comprise alloys with 70-90 wt.% copper and 30-10 wt.% zinc.

3. A friction material according to claim 1 or 2, characterised in that the proportion of brass powders constitutes up to 90 wt.% of the friction material.

4. A friction material according to any one of claims 1 to 3, characterised in that the grain sizes of the brass powders range between 40µ and 200µ and the individual components are formed with the other constituents as grain bands which produce a homogeneous pourable mixture in the compound.

5. A friction material according to any one of claims 1 to 4, characterised in that the finished sintered and pressed friction surface has a porosity of 10-40%.

## Revendications

1. Matériau de friction pour surfaces de friction d'embrayages ou de freins, constitué par métallurgie des poudres, produit par frittage, qui contient essentiellement des constituants métalliques et non métalliques en poudre et/ou en grains, dont au moins un est un métal lourd non ferreux, où les composants en métaux lourds non ferreux du matériau de friction sont à base de laiton, le métal non ferreux se compose essentiellement de poudres de laiton d'un alliage ou d'alliages différents et où le matériau de friction ne contient pas de poudres de cuivre libres, mais uniquement du étain et au maximum du fer comme composant métallique sous forme pure.

2. Matériau de friction selon la revendication 1, caractérisé en ce que les poudres de laiton se compose d'alliages contenant 70 à 90 % en poids de cuivre et 30 à 10 % en poids de zinc.

3. Matériau de friction selon la revendication 1 ou 2, caractérisé en ce que la proportion de poudres de laiton atteint jusqu'à 90% en poids du matériau de friction.

4. Matériau de friction selon une des revendications 1 à 3, caractérisé en ce que les grosseurs de grains des poudres de laiton sont comprises entre 40 et 200 µm et que les différents composants ainsi que les autres constituants se présentent sous forme de bandes granulométriques qui donnent en mélange un mélange fluide homogène.

5. Matériau de friction selon une des revendications 1 à 4, caractérisé en ce que la surface de friction frittée et comprimée présente une porosité de 10 à 40 %.
